# EUROPÄISCHE PATENTSCHRIFT

(11) **EP 1 660 207 B1**
(45) Veröffentlichungstag und Bekanntmachung des Hinweises auf die Patenterteilung: **22.08.2007**
(21) Anmeldenummer: 04764313.5
(22) Anmeldetag: 20.08.2004
(51) Int. Cl.: B01D 19/02

(54) **VORRICHTUNG ZUM AUFTRENNEN EINES SCHAUMS IN EINEN FLÜSSIGKEITS- UND EINEN GASANTEIL**
DEVICE FOR SEPARATING A FOAM INTO A LIQUID AND A GASEOUS PORTION
DISPOSITIF SERVANT A DECOMPOSER UNE MOUSSE EN UNE PARTIE LIQUIDE ET UNE PARTIE GAZEUSE

(30) Priorität: 03.09.2003 AT 20031379
(43) Veröffentlichungstag der Anmeldung: 31.05.2006
(73) Patentinhaber: Heinrich Frings GmbH & Co. KG, D-53115 Bonn (DE)
(72) Erfinder: EMDE, Frank, 53111 Bonn (DE)
(74) Vertreter: Hübscher, Helmut
(86) Internationale Anmeldenummer: PCT/EP2004/009329
(87) Internationale Veröffentlichungsnummer: WO 2005/028067

(56) Entgegenhaltungen:
- EP-A- 0 374 122
- DE-C- 731 607
- DATABASE WPI Section Ch, Week 198423 Derwent Publications Ltd., London, GB; Class D16, AN 1984-145655 XP002306712 & SU 1 043 164 A (MOSCOW CHEM EQUIP INST) 23. September 1983 (1983-09-23)

## Beschreibung

### Technisches Gebiet

Die Erfindung bezieht sich auf eine Vorrichtung zum Auftrennen eines Schaums in einen Flüssigkeits- und einen Gasanteil mit einem in einem Gehäuse gelagerten Rotor, der einen mittels radialer Flügel auf einer Nabe abgestützten, auf der einen Stirnseite an einen Schaumeinlauf und auf der gegenüberliegenden Stirnseite an einen Gasabzug des Gehäuses angeschlossenen Umlaufzylinder aufweist, wobei das Gehäuse einen den Umlaufzylinder umschließenden, spiralförmigen Flüssigkeitsablauf bildet, in dessen Bereich der Umlaufzylinder über den Umfang verteilte Durchtrittsöffnungen besitzt.

### Stand der Technik

Um die Auftrennung des bei einer Essigfermentation anfallenden Schaums in einen Flüssigkeits- und in einen Gasanteil mit einem vergleichsweise geringen Energieeinsatz zu ermöglichen, ist es bekannt (EP 374 122 B1), einen Rotor in Form eines Umlaufzylinders vorzusehen, der über radiale Flügel auf einer Nabe abgestützt ist und in einem jeweils entgegen der Umlaufrichtung an die Flügel anschließenden Wandbereich radiale Durchtrittslöcher aufweist. Der axial in den Umlaufzylinder eintretende Schaum wird daher von den Flügeln erfaßt und unter dem Einfluß der wirksamen Fliehkräfte gegen die innere Wand des Umlaufzylinders bewegt, wo er verdichtet wird. Die Flüssigkeits- und Schaumanteile, die sich in einem jeweils in Drehrichtung an einen Flügel anschließenden Wandbereich des Umlaufzylinders ansammeln, müssen sich erst in Drehrichtung entlang der inneren Wand des Umlaufzylinders bis zu dem in Drehrichtung folgenden Flügel ausbreiten, bevor diese Flüssigkeits- und Schaumanteile durch die radialen Durchtrittslöcher im Umlaufzylinder in das den Umlaufzylinder umgebende Gehäuse gelangen können. Die dadurch verlängerte Fliehkrafteinwirkung unterstützt die Gasaustreibung. Während das ausgetriebene Gas den Umlaufzylinder auf der dem Schaumeinlauf gegenüberliegenden Stirnseite verläßt, wird der gegebenenfalls noch mit Schaumresten behaftete Flüssigkeitsanteil in das den Rotor aufnehmende Gehäuse ausgeschleudert, das im axialen Abschnitt der Durchtrittsöffnungen des Umlaufzylinders einen den Umlaufzylinder umschließenden, spiralförmigen Flüssigkeitsablauf bildet. Obwohl sich diese bekannte Vorrichtung zum Auftrennen von bei der Essigfermentation anfallenden Schäumen in einen Flüssigkeits- und einen Gasanteil gut bewährt, treten dann Schwierigkeiten auf, wenn es gilt, Schäume, wie sie beispielsweise bei der Bierherstellung anfallen, zu behandeln, deren Drainagefähigkeit im Zentrifugal- und Scherfeld des Rotors und damit die Dichte des aus dem Rotor austretenden Schaumkonzentrats vergleichsweise gering ausfällt, weil in einem solchen Fall bei einem entsprechenden Schaumanfall die Gefahr besteht, daß der Umlaufzylinder von einem Schaumanteil ohne Auftrennung in einen Flüssigkeits- und einen Gasanteil durchsetzt wird, so daß dieser Schaumanteil in den Gasabzug gelangt.

### Darstellung der Erfindung

Der Erfindung liegt somit die Aufgabe zugrunde, eine Vorrichtung zum Auftrennen eines Schaums in einen Flüssigkeits- und einen Gasanteil der eingangs geschilderten Art so auszugestalten, daß auch Schäume mit einer vergleichsweise geringen Dichte behandelt werden können, ohne einen Schaumaustritt auf der dem Gasabzug zugekehrten Stirnseite des Umlaufzylinders befürchten zu müssen.

Die Erfindung löst die gestellte Aufgabe dadurch, daß der Umlaufzylinder im Bereich des Flüssigkeitsablaufes in diesen ragende Pumpenflügel trägt.

Der Erfindung liegt die Erkenntnis zugrunde, daß bei Schäumen mit einer vergleichsweise geringen Dichte die fliehkraftbedingte Beschleunigung nicht ausreicht, um für eine störungsfreie Weiterförderung der Flüssigkeits- und Schaumanteile außerhalb des Umlaufzylinders zu sorgen. Durch die im Bereich des Flüssigkeitsablaufes erfindungsgemäß vorgesehenen Pumpenflügel auf der Außenwandung des Umlaufzylinders werden einerseits Flüssigkeit und Schaumreste aus dem Umlaufzylinder in den spiralförmigen Flüssigkeitsablauf angesaugt und anderseits auf das angesaugte Gut Druckkräfte im Sinne eines Gutaustrages durch den Flüssigkeitsablauf ausgeübt, so daß selbst bei einem größeren Schaumanfall ein axialer Durchtritt des Schaums zum Gasabzug unterbunden wird. Die im Umlaufzylinder auf den zu behandelnden Schaum einwirkenden Fliehkräfte und die Kraftwirkungen der durch die Pumpenflügel im Bereich des spiralförmigen Flüssigkeitsablaufes erhaltenen, selbstansaugenden Pumpe unterstützen einander in vorteilhafter Weise, so daß auch bei schwierigen Entschäumungsbedingungen eine weitgehende Auftrennung des Schaums in einen Flüssigkeits- und einen Gasanteil sichergestellt wird.

Um den zu behandelnden Schaum über eine längere Wegstrecke innerhalb des Umlaufzylinders einer entsprechenden Fliehkraftwirkung aussetzen zu können, kann der spiralförmige Flüssigkeitsablauf in einem dem Gasabzug zugekehrten axialen Endabschnitt des Umlaufzylinders vorgesehen sein.

### Kurze Beschreibung der Erfindung

In der Zeichnung ist der Erfindungsgegenstand beispielsweise dargestellt. Es zeigen
- Fig. 1: eine erfindungsgemäße Vorrichtung zum Auftrennen eines Schaums in einen Flüssigkeits- und einen Gasanteil in einem schematischen Axialschnitt und
- Fig. 2: diese Vorrichtung in einem Schnitt nach der Linie II-II der Fig. 1.

### Weg zur Ausführung der Erfindung

Die Vorrichtung zum Auftrennen eines Schaums in einen Flüssigkeits- und einen Gasanteil weist gemäß dem dargestellten Ausführungsbeispiel ein zylindrisches Gehäuse 1 auf, das einen Rotor 2 aufnimmt. Dieser Rotor 2 besteht aus einem Umlaufzylinder 3, der mit Hilfe radialer Flügel 4 auf einer Nabe 5 abgestützt ist, die durch einen Elektromotor 6 im Umlaufsinn 7 angetrieben wird. Das Gehäuse 1 bildet im Bereich der einen Stirnseite des Umlaufzylinders 3 einen Schaumeinlauf 8 und auf der gegenüberliegenden Stirnseite des Umlaufszylinders 3 eine Gaskammer 9, die an einen Gasabzug 10 angeschlossen ist.

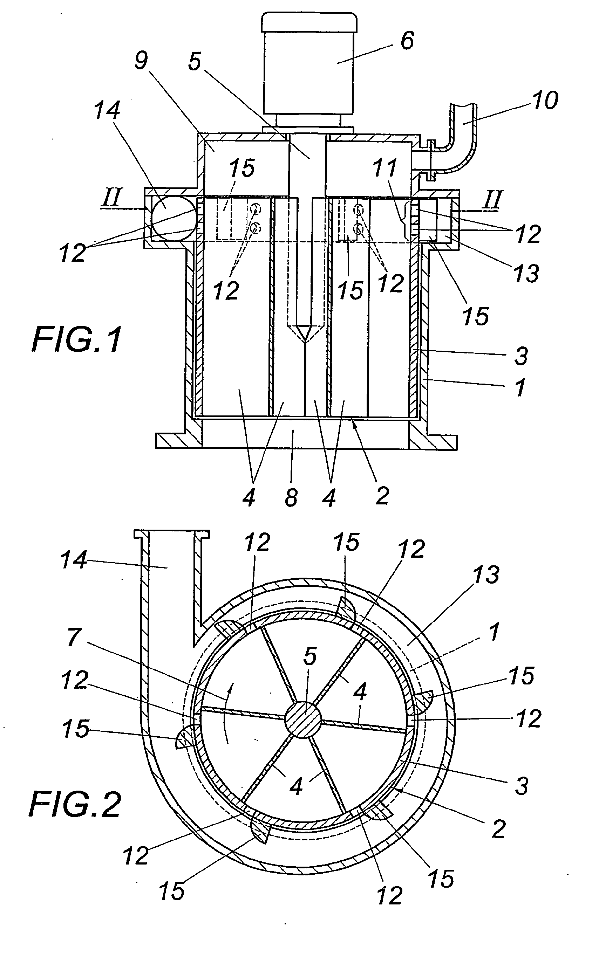

In einem der Gaskammer 9 zugekehrten axialen Endabschnitt 11 ist der Umlaufzylinder 3 mit Durchtrittsöffnungen 12 versehen, die in Umlaufrichtung 7 jeweils unmittelbar vor einem Flügel 4 angeordnet sind, wie dies insbesondere der Fig. 2 entnommen werden kann. Im Bereich des axialen Abschnittes 11 bildet das Gehäuse 1 einen den Umlaufzylinder 3 umschließenden, spiralförmigen Flüssigkeitsablauf 13, der in einen Ablaufstutzen 14 übergeht. Im Bereich des Flüssigkeitsablaufes 13 trägt der Umlaufzylinder 3 über den Umfang verteilte Pumpenflügel 15, die in den spiralförmigen Flüssigkeitsablauf 13 ragen und mit diesem als Gehäuse eine selbstansaugende Pumpe bilden.

Der über den Schaumeinlauf 8 in den stirnseitig offenen Umlaufzylinder 3 eindringende Schaum wird von den Flügeln 4 des Rotors 2 mitgenommen und fliehkraftbedingt gegen die Innenwandung des Umlaufzylinders 3 gedrückt und während seines Weges zu den Durchtrittslöchern 12 im Endabschnitt 11 in einen Flüssigkeits- und in einen Gasanteil getrennt. Während der Gasanteil den Umlaufzylinder 3 in axialer Richtung verläßt und in die Gaskammer 9 des Gehäuses 1 strömt, wird der Flüssigkeitsanteil zusammen mit allenfalls noch vorhandenen Schaumresten durch die Durchtrittsöffnungen 12 unter der Einwirkung der Pumpenflügel 15 abgesaugt und durch den Flüssigkeitsablauf 13 und den Ablaufstutzen 14 ausgetragen, wobei in Abhängigkeit von den konstruktiven Vorgaben der mit Hilfe der Pumpenflügel 15 gebildeten Pumpe eine entsprechende Förderleistung vorgegeben werden kann. Damit gelingt es, auch Schäume mit geringer Dichte vorteilhaft in einen Flüssigkeits- und in einen Gasanteil aufzutrennen, ohne Gefahr zu laufen, daß Schaumreste in den Gasabzug 10 gelangen.

## Patentansprüche

1. Vorrichtung zum Auftrennen eines Schaums in einen Flüssigkeits- und einen Gasanteil mit einem in einem Gehäuse (1) gelagerten Rotor (2), der einen mittels radialer Flügel (4) auf einer Nabe (5) abgestützten, auf der einen Stirnseite an einen Schaumeinlauf und auf der gegenüberliegenden Stirnseite an einen Gasabzug (10) des Gehäuses (1) angeschlossenen Umlaufzylinder (3) aufweist, wobei das Gehäuse (1) einen den Umlaufzylinder (3) umschließenden, spiralförmigen Flüssigkeitsablauf (13) bildet, in dessen Bereich der Umlaufzylinder (3) über den Umfang verteilte Durchtrittsöffnungen (12) besitzt, die in Umlaufrichtung (7) jeweils unmittelbar vor einem Flügel (4) angeordnet sind, **dadurch gekennzeichnet, daß** der Umlaufzylinder (3) im Bereich des Flüssigkeitsablaufes (13) in diesen ragende Pumpenflügel (15) trägt.

2. Vorrichtung nach Anspruch 1, **dadurch gekennzeichnet, daß** der spiralförmige Flüssigkeitsablauf (13) in einem dem Gasabzug (9) zugekehrten axialen Endabschnitt (11) des Umlaufzylinders (3) vorgesehen ist.

## Claims

1. Device for separating a foam into a liquid and a gaseous portion with a rotor (2) supported in a housing (1) which comprises a rotating cylinder (3) resting by means of radial vanes (4) on a hub (5) and connected on one end face to a foam inlet and on the opposite end face to a gas outlet (10) of the housing (1), wherein the housing (1) forms a spiral liquid outlet (13) surrounding the rotating cylinder (3), in the region of which the rotating cylinder (3) has passage openings (12) distributed around the periphery which are each arranged in the direction of rotation (7) directly before a vane (4), **characterised in that** the rotating cylinder (3) carries, in the region of the liquid outlet (13), pump vanes (15) projecting into this.

2. Device according to claim 1, **characterised in that** the spiral liquid outlet (13) is provided in an axial end section (11) of the rotating cylinder (3) facing the gas outlet (9).

## Revendications

1. Dispositif servant à décomposer une mousse en une partie liquide et une partie gazeuse, avec un rotor (2), monté dans un boîtier (1) et présentant un cylindre rotatif (3) soutenu sur un moyeu (5) au moyen d'ailettes (4) radiales, cylindre rotatif raccordé, à une face frontale, à une entrée de mousse et, sur la face frontale opposée, à une extraction de gaz (10) du boîtier (1), le boîtier (1) formant une évacuation de liquide (13) à forme spirale entourant le cylindre rotatif (3), évacuation de liquide dans la zone de laquelle le cylindre rotatif (3) comprend des ouvertures de passage (12), réparties sur la périphérie et disposées, dans la direction périphérique (7), chacune directement devant une ailette (4), **caractérisé en ce que** le cylindre rotatif (3) porte, dans la zone de l'évacuation de liquide (13), des ailettes de pompe (15) pénétrant dans celle-ci.

2. Dispositif selon la revendication 1, **caractérisé en ce que** l'évacuation de liquide (13) à forme spirale est prévue dans un tronçon d'extrémité (11) axial, tourné vers l'extraction de gaz (9), du cylindre rotatif (3).
